# EUROPEAN PATENT APPLICATION

(11) **EP 4 764 908 A1**
(43) Date of publication of application: **24.06.2026**
(21) Application number: 25213959.7
(22) Date of filing: 06.11.2025
(51) Int. Cl.: G06F 21/16, G06T 1/00, G06F 21/56

(54) **SYSTEMS, METHODS, AND APPARATUS FOR TRUST ASSURANCE FOR GUI CONTROLS PRESENTED ON CLIENT DISPLAY**

(30) Priority: 23.12.2024 US 202419000141
(71) Applicant: INTEL Corporation, Santa Clara, CA 95054 (US)
(72) Inventor: HOROVITZ, Dan, 7578229 Rishon Letzion (IL); KOHLENBERG, Tobias M., Portland, 97219 (US); SAINT, Anthony, Santa Clara, 95054 (US); TANRIOVER, Cagri, Portland, 97229 (US); VAUGHN, Robert L., Portland, 97229 (US)
(74) Representative: Viering, Jentschura & Partner mbB Patent- und Rechtsanwälte

(57) **Abstract**

Systems, apparatus, articles of manufacture, and methods are disclosed provide a trust assurance for GUI controls presented on client display. At least one non-transitory machine-readable medium includes machine-readable instructions to cause at least one processor circuit to at least: generate a graphical user interface; obtain an image associated with a destination for the graphical user interface; embed a first plurality of pixels of the image into at least one of a hue channel, a saturation channel, or a luminance channel of a second plurality of pixels of the graphical user interface to create an embedded graphical user interface; and cause the embedded graphical user interface to be sent to the destination.

## Description

### BACKGROUND

Users of computing devices are frequently presented with popup messages from their local system, operating system and/or application vendors, and enterprise information technology (IT) management systems. The popup messages are typically presented in the form of a graphical user interface (GUI) and request the user to, for example, click buttons and/or links, enter information (e.g., confidential information such as passwords, identifying information, etc.), etc.

### BRIEF DESCRIPTION OF THE DRAWINGS

FIG. 1 is a block diagram of an example environment in which an example image encoder circuitry operates to generate popup messages embedded with encoded images and an example image decoder circuitry operates to decode the encoded images.
FIG. 2 is a block diagram of an example implementation of the image encoder circuitry of FIG. 1.
FIG. 3 is a block diagram of an example implementation of the image decoder circuitry of FIG. 1.
FIG. 4A is an example image that can be encoded into a popup message by the image encoder circuitry of FIG. 1.
FIG. 4B is an example encoded popup image generated by the example image encoder circuitry of FIG. 1 using the example image of FIG. 4A.
FIG. 4C is an example decoded image generated by the example image decoder circuitry of FIG. 1 by decoding the example encoded popup image of FIG. 4B.
FIG. 5A is an example image that can be encoded into a popup message by the image encoder circuitry of FIG. 1.
FIG. 5B is an example encoded popup image generated by the example image encoder circuitry of FIG. 1 using the example image of FIG. 5A.
FIG. 5C is an example decoded image generated by the example image decoder circuitry of FIG. 1 by decoding the example encoded popup image of FIG. 5B.
FIG. 6A is an example image that can be encoded into a popup message by the image encoder circuitry of FIG. 1.
FIG. 6B is an example encoded popup image generated by the example image encoder circuitry of FIG. 1 using the example image of FIG. 6A.
FIG. 6C is an example decoded image generated by the example image decoder circuitry of FIG. 1 by decoding the example encoded popup image of FIG. 6B.
FIG. 7 is a flowchart representative of example machine readable instructions and/or example operations that may be executed, instantiated, and/or performed by example programmable circuitry to implement the image encoder circuitry of FIG. 2.
FIG. 8 is a flowchart representative of example machine readable instructions and/or example operations that may be executed, instantiated, and/or performed by example programmable circuitry to implement the image decoder circuitry of FIG. 3.
FIG. 9 is a block diagram of an example processing platform including programmable circuitry structured to execute, instantiate, and/or perform the example machine readable instructions and/or perform the example operations of FIGS. 7 and 8 to implement the image encoder circuitry of FIG. 2 and/or the image decoder circuitry of FIG. 3.
FIG. 10 is a block diagram of an example implementation of the programmable circuitry of FIG. 9.
FIG. 11 is a block diagram of another example implementation of the programmable circuitry of FIG. 9.

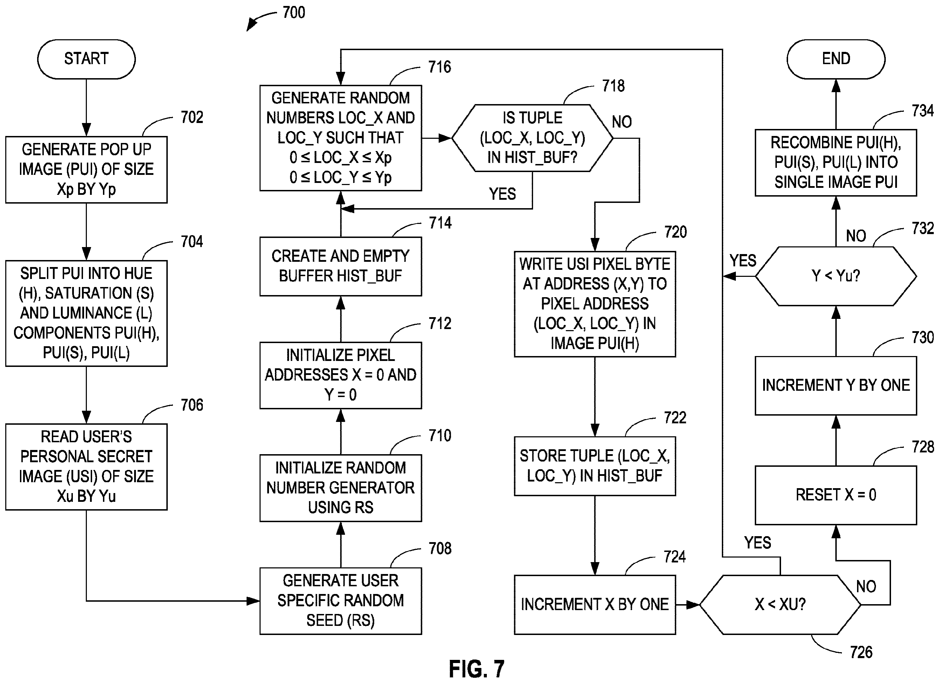

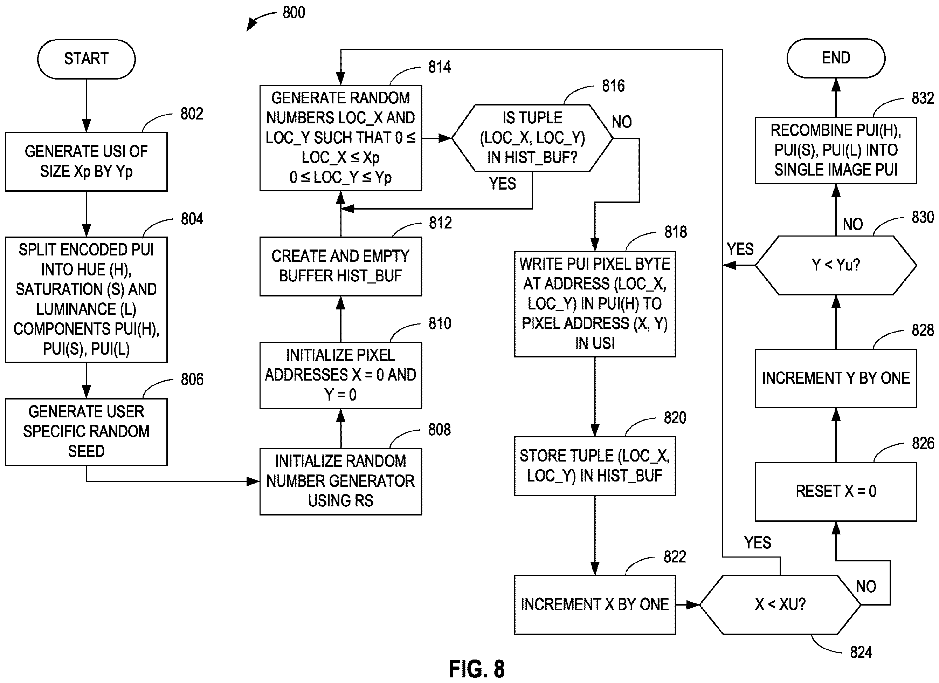

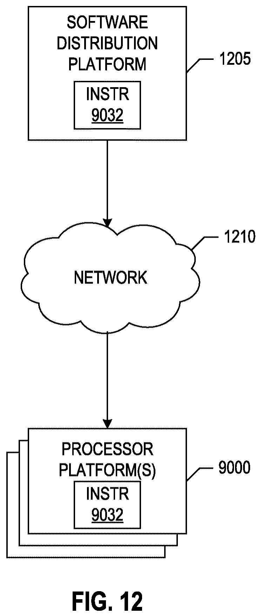

FIG. 12 is a block diagram of an example software/firmware/instructions distribution platform (e.g., one or more servers) to distribute software, instructions, and/or firmware (e.g., corresponding to the example machine readable instructions of FIGS. 7 and 8) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Users of computing systems are frequently presented with messages (e.g., popup messages, applications, web pages, dialogues, or other graphical user interface elements) that can pose a security risk if generated by a malicious actor, rather than a legitimate source. Users often simply accept the authenticity of such messages. In an example arrangement, a first system (e.g., an enterprise IT management system) that wants a second system to perform certain actions (e.g., accept a software update, enter login information, etc.) generates a message to be presented to a second system (e.g., a user device). Some known systems require a user to authenticate themself (e.g., complete a challenge-response test). However, known systems may not incorporate any mechanism for proving the authenticity of the message to the user. Thus, users often depend on their past experience to determine that the message comes from a legitimate source. Because fraudulent messages are trivial to be generated by malicious actors, user experience is often unreliable at detecting the difference between a legitimate message and an illegitimate one.

Methods, systems, and apparatus disclosed herein accept an image (e.g., a secret image, an image known only to a user, or any other image) from a user (e.g., during an initial registration or setup process) and a message as inputs to produce an embedded message to be delivered to a user device. Methods, systems, and apparatus disclosed herein enable the user device to decode the embedded message and display the embedded message and a decoded image. By comparing the received, decoded image to the image initially provided by the user, disclosed examples enable the user to confirm the authenticity of the message. For example, when disclosed examples decode messages generated by malicious actors, the decoded image will not match the image provided by the user because the malicious actor does not have access to the image provided by the user. Disclosed examples encode image information into image characteristics such as at least one of the hue, luminance, and saturation channels of the message. In some examples, the message is encoded and decoded using random number generators. In some examples, simplified images are used (e.g., images with only two colors, images with simple designs, etc.).

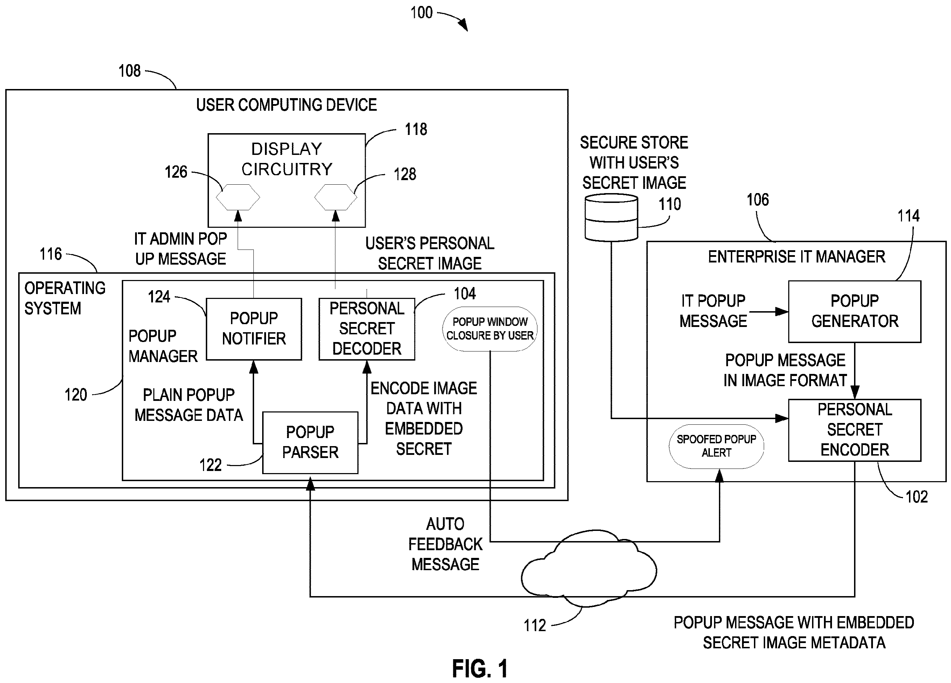

FIG. 1 is a block diagram of an example environment 100 in which an example image encoder circuitry 102 and operates to generate popup messages with embedded images and an example image decoder circuitry 104 operates to decode encoded popup images. The example environment 100 includes an example enterprise IT manager 106, an example user computing device 108, an example secure storage 110, and an example network 112.

In the illustrated example of FIG. 1, the example enterprise IT manager 106 is a server. In other examples, the enterprise IT manager 106 is another computing device such as a personal computer, a workstation, a mobile device, or any other type of computing device. In some examples, the enterprise IT manager 106 is an application executed on a computing device. In the illustrated example of FIG. 1, the enterprise IT manager 106 is communicatively coupled to the secure storage 110 and, via the network 112, the example user computing device 108.

The enterprise IT manager 106 includes an example popup generator circuitry 114 and the example image encoder circuitry 102. In some examples, the popup generator circuitry 114 is an Application-Specific Integrated Circuit, an XPU, a Field-Programmable Gate Array, and other any other processor circuitry and/or combination of processor circuitries. In the illustrated example of FIG. 1, the popup generator circuitry 114 is implemented on the enterprise IT manager 106 and is communicatively coupled to the image encoder circuitry 102.

The popup generator circuitry 114 generates popup messages to be delivered to the user device. For example, the popup generator circuitry 114 can generate a security alert popup message. The generated popup message can be used to both communicate information to a user and enable the user to select from a variety of options. The popup generator circuitry 114 generates popup messages in an image format, with the image represented as a matrix of pixel values. In some examples, the popup messages generated by the popup generator circuitry 114 are a GUI. In some examples, the popup generator circuitry 114 generates popup messages according to a policy of the enterprise IT manager 106. The popup generator circuitry outputs the popup message to the image encoder circuitry 102. While the example popup generator circuitry 114 generates popup messages in the illustrated example of FIG. 1, the popup generator circuitry 114 can generate other messages (e.g., applications, web pages, dialogues, or other graphical user interface elements).

In some examples, the image encoder circuitry 102 is an Application-Specific Integrated Circuit, an XPU, a Field-Programmable Gate Array, and other any other processor circuitry and/or combination of processor circuitries. In the illustrated example of FIG. 1, the image encoder circuitry 102 is implemented on the enterprise IT manager 106 and is communicatively coupled to the popup generator circuitry 114, the secure storage 110, and the user computing device 108.

The example image encoder circuitry 102 of the illustrated example of FIG. 1 encodes an image into popup messages generated by the popup generator circuitry 114. In the illustrated example of FIG. 1, the image encoder circuitry 102 obtains the image from the secure storage 110. The image is represented as a matrix of pixel values. For example, an image may be represented as a two-dimensional matrix of pixel values with each the pixel value representing an intensity of the pixel, or as a three-dimensional matrix of pixel values, where the third dimension represents different components (e.g., color components, a hue component, a saturation component, a luminance component, etc.). The image encoder circuitry 102 receives the popup message from the popup generator circuitry 114. The image encoder circuitry encodes an image format version of the popup message (e.g., a popup image (pui) matrix). The popup image matrix includes a hue, a saturation, and a luminance color component (e.g., channel, slice). In some examples, the image encoder circuitry 102 splits the popup image matrix into a two-dimensional hue matrix (pui(H)), a two-dimensional saturation matrix (pui(S)), and a two-dimensional luminance matrix (pui(L)).

The image encoder circuitry 102 encodes (e.g., copies, writes) the data from the image into the pui(H), pui(S), and pui(L) matrices to generate an encoded popup image. In some examples, the image encoder circuitry 102 encodes the image on an element-by-element basis. The image encoder circuitry 102 selects elements of the pui matrices to which it will write the data of the image. For example, the image encoder circuitry 102 copies a first element of the image into a second element of the pui(S) matrix. In some examples, the image encoder circuitry 102 selects the elements in the pui matrix to which the image data will be written based on outputs of a random number generator. After encoding the image into the pui(H), pui(S), and pui(L) matrices, the image encoder circuitry 102 recombines the matrices to form the encoded popup image. The image encoder circuitry 102 generates an embedded popup message by putting the encoded popup image in metadata of the popup message generated by the popup generator circuitry 114. The image encoder circuitry 102 outputs the embedded popup message to the user computing device 108.

The example user computing device 108 includes an example operating system (OS) 116 and an example user display circuitry 118. The OS 116 implements an example popup manager circuitry 120. In some examples, the popup manager circuitry 120 is an Application-Specific Integrated Circuit, an XPU, a Field-Programmable Gate Array, and other any other processor circuitry and/or combination of processor circuitries. In the illustrated example of FIG. 1, the popup manager circuitry 120 is implemented on the OS 116 and is communicatively coupled to the image encoder circuitry 102 via the network 112, and to the user display circuitry 118. The popup manager circuitry 120 includes an example popup parser circuitry 122, an example popup notifier circuitry 124, and the example image decoder circuitry 104.

In some examples, the popup parser circuitry 122 is an Application-Specific Integrated Circuit, an XPU, a Field-Programmable Gate Array, and other any other processor circuitry and/or combination of processor circuitries. In the illustrated example of FIG. 1, the popup parser circuitry 122 is communicatively coupled to the image encoder circuitry 102 via the network 112, to the popup notifier circuitry 124, and to the image decoder circuitry 104. The popup parser circuitry 122 receives the embedded popup message from the image encoder circuitry 102. The popup parser circuitry 122 separates the popup message data from the metadata which includes the encoded popup image. The popup parser circuitry 122 sends the popup message data to the popup notifier circuitry 124 and the encoded popup image to the image decoder circuitry 104.

In some examples, the popup notifier circuitry 124 is an Application-Specific Integrated Circuit, an XPU, a Field-Programmable Gate Array, and other any other processor circuitry and/or combination of processor circuitries. In the illustrated example of FIG. 1, the popup notifier circuitry 124 is communicatively coupled to the popup notifier circuitry 124 and to the user display circuitry 118. The popup notifier circuitry 124 receives the popup message data from the popup parser circuitry 122 and causes display of the popup message with action buttons to the user.

In some examples, the image decoder circuitry 104 is an Application-Specific Integrated Circuit, an XPU, a Field-Programmable Gate Array, and other any other processor circuitry and/or combination of processor circuitries. In the illustrated example of FIG. 1, the image decoder circuitry 104 is communicatively coupled to the popup parser circuitry 122 and to the user display circuitry 118.

The image decoder circuitry 104 decodes encoded popup images and outputs decoded images for display to the user. The image decoder circuitry 104 obtains the encoded popup image matrix from the popup parser circuitry 122 and splits the encoded popup image into an embedded hue matrix (pui(H)), an embedded saturation matrix (pui(S)), and an embedded luminance matrix (pui(L)). The image decoder circuitry 104 initializes a decoded image matrix.

The image decoder circuitry 104 decodes (e.g., copies, writes) the image data from the pui(H), pui(S), and pui(L) matrices to the decoded image matrix to generate the decoded image. In some examples, the image decoder circuitry 104 decodes the image on an element-by-element basis. The image decoder circuitry 104 selects elements of the embedded hue channel, embedded saturation channel, and/or embedded luminance channel from which it will copy the data to the decoded image matrix. For example, the image decoder circuitry 104 copies a first element of the pui(S) matrix into a second element of the decoded image matrix. The image decoder circuitry 104 selects the elements of the pui matrices in which the image encoder circuitry 102 encoded to image data. In some examples, the image decoder circuitry 104 selects the elements in the pui matrix from which the image data will be decoded based on a random number generator. The image decoder circuitry 104 outputs the decoded image to the user display circuitry 118.

In some examples, the user display circuitry 118 is an Application-Specific Integrated Circuit, an XPU, a Field-Programmable Gate Array, and other any other processor circuitry and/or combination of processor circuitries. In the illustrated example of FIG. 1, the image decoder circuitry 104 is communicatively coupled to the popup notifier circuitry 124, to the image decoder circuitry 104, and a display. The user display circuitry 118 receives the popup message and the decoded image from the popup manager circuitry 120 and causes display of the popup message and the decoded image to the user. In some examples, the user display circuitry 118 enables an interactable display area 126 and an OS watermarked display area 128. In those examples, the popup message is displayed via the interactable display area 126, and the image is displayed via the OS watermarked display area 128.

In some examples, the popup manager circuitry 120 determines a message displayed to the user is fraudulent based on user feedback. For example, the user feedback includes the user closing a window displaying the message or the user indicating the second decoded image does not match the image. In those examples, the popup manager circuitry 120 automatically generates an alert indicating malicious activity. In some examples, the popup manager circuitry 120 sends the alert to the enterprise IT manager circuitry 106.

The example secure storage 110 stores images provided by users. In some examples, the secure storage includes additional information related to users, such as, for example, an identifier, a random seed, user credentials, etc. In some examples, the secure storage is a cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk.

While an example environment 100 including the image encoder circuitry 102 and image decoder circuitry 104 is illustrated in FIG. 1, one or more of the elements, and/or devices illustrated in FIG. 1 may be combined, divided, re-arranged, omitted, eliminated, and/or implemented in any other way. For example, the secure storage 110 can be located in the enterprise IT manager 106 or on the same device as the enterprise IT manager 106, the enterprise IT manager 106 can be implemented on the user computing device 108, and/or the enterprise IT manager 106 can communicate directly with the user computing device 108. Further still, the example environment 100 of FIG. 1 may include one or more elements, and/or devices in addition to, or instead of, those illustrated in FIG. 1, and/or may include more than one of any or all of the illustrated elements, processes and devices.

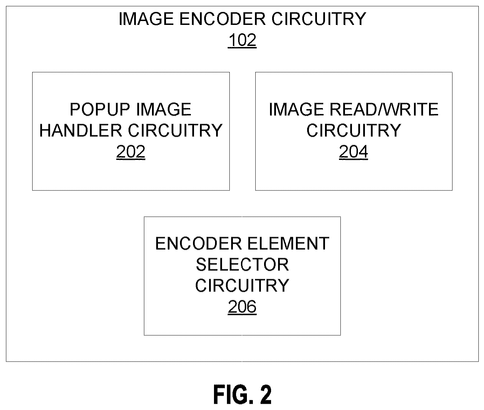

FIG. 2 is a block diagram of an example implementation of the image encoder circuitry 102 of FIG. 1 to generate embedded popup messages. The image encoder circuitry 102 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the image encoder circuitry 102 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The example image encoder circuitry 102 of the illustrated example of FIG. 2 includes an example popup image handler circuitry 202, an example image read/write circuitry 204, and an example encoder element selector circuitry 206.

The example popup image handler circuitry 202 of the illustrated example of FIG. 2 obtains the popup image from the popup generator circuitry 114. The popup image handler circuitry 202 separates the popup image into the hue, saturation, and luminance color components. For example, the popup image handler circuitry 202 separates the pui matrix into pui(H), pui(S), and pui(L) matrices. The popup image handler circuitry 202 outputs at least one of the pui(H), pui(S), and/or pui(L) matrices to the image read/write circuitry 204.

After the image read/write circuitry 204 completes encoding of the image into at least one of the pui(H), pui(S), and/or pui(L) matrices, the popup image handler circuitry 202 recombines the pui(H), pui(S), and/or pui(L) matrices to generate the encoded popup image. The popup image handler circuitry 202 outputs the encoded popup image to the user computing device 108. In some examples, the popup image handler circuitry 202 is instantiated by programmable circuitry executing popup image handler instructions and/or configured to perform operations such as those represented by the flowchart of FIG. 7.

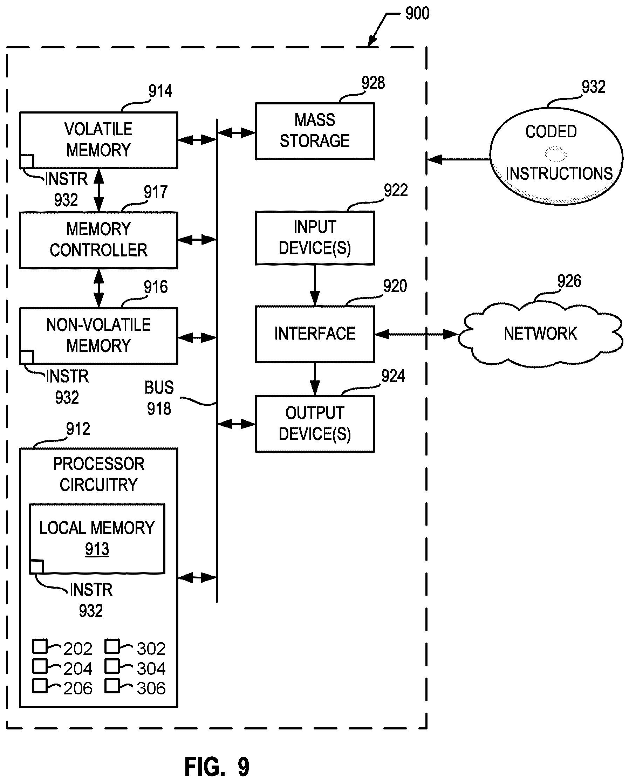

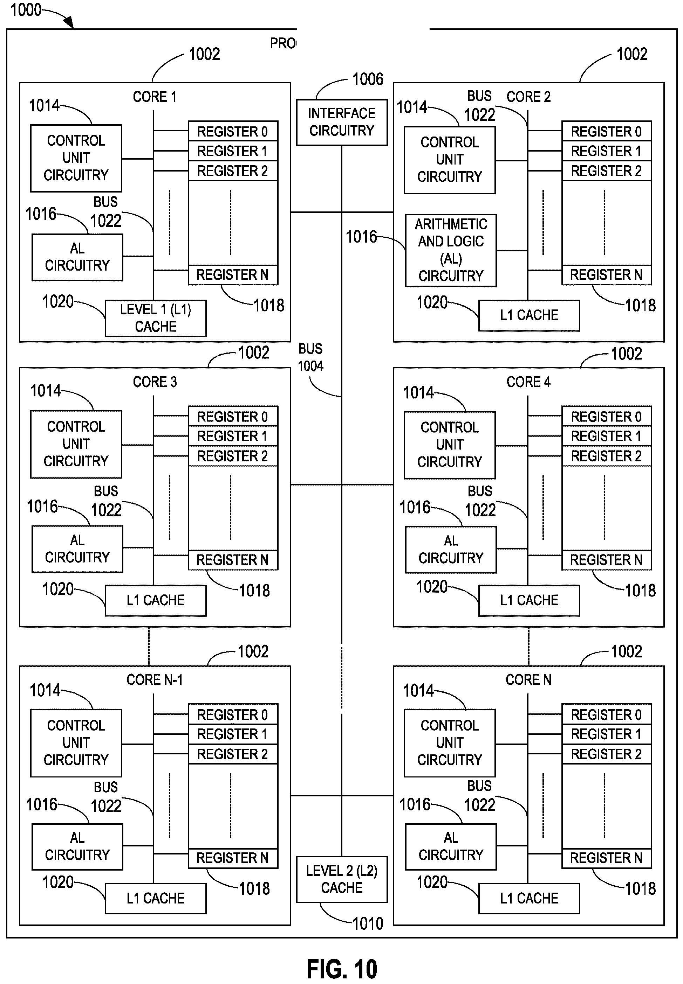

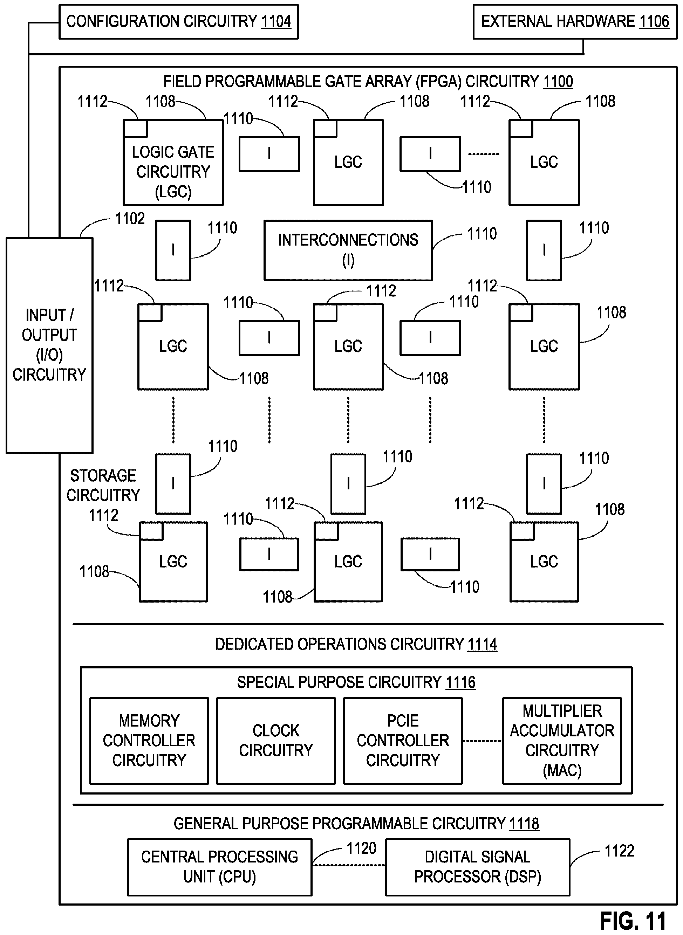

In some examples, the image encoder circuitry 102 includes means for handling the popup image. For example, the means for handling may be implemented by the popup image handler circuitry 202. In some examples, the popup image handler circuitry 202 may be instantiated by programmable circuitry such as the example programmable circuitry 912 of FIG. 9. For instance, the popup image handler circuitry 202 may be instantiated by the example microprocessor 1000 of FIG. 10 executing machine executable instructions such as those implemented by at least blocks 702-704, and 734 of FIG. 7. In some examples, the popup image handler circuitry 202 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the popup image handler circuitry 202 may be instantiated by any other combination of hardware, software, and/or firmware. For example, the popup image handler circuitry 202 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example image read/write circuitry 204 of the illustrated example of FIG. 2 obtains the pui(H), pui(S), and/or pui(L) matrices from the popup image handler circuitry 202 and the image from the secure storage 110. The image read/write circuitry 204 encodes the data from the image into the pui(H), pui(S), and pui(L) matrices. For example, the image read/write circuitry 204 writes the data in the image into random elements in the pui(S) matrix. In some examples, the image read/write circuitry 204 encodes the image on an element-by-element basis. In such examples, the data for a given pixel (e.g., element) of the image, is copied into a single element of the pui(H), pui(S), and/or pui(L) matrices.

In some examples, the image read/write circuitry 204 obtains pixel addresses from the encoder element selector circuitry 206 to select the elements in the image and the pui(H), pui(S), and/or pui(L) matrices. For example, the image read/write circuitry 204 obtains a first pixel address for a first element of the image from which the data is copied and obtains a second pixel address for a second element of the pui(S) matrix to which the data is copied.

After the image read/write circuitry 204 completes encoding of the image into the pui(H), pui(S), and/or pui(L) matrices, the image read/write circuitry 204 outputs the pui(H), pui(S), and/or pui(L) matrices to the popup image handler circuitry 202. In some examples, the image read/write circuitry 204 is instantiated by programmable circuitry executing image read/write instructions and/or configured to perform operations such as those represented by the flowchart of FIG. 7.

In some examples, the image encoder circuitry 102 includes means for reading and writing image data from a user's image. For example, the means for reading and writing may be implemented by the image read/write circuitry 204. In some examples, the image read/write circuitry 204 may be instantiated by programmable circuitry such as the example programmable circuitry 912 of FIG. 9. For instance, the image read/write circuitry 204 may be instantiated by the example microprocessor 1000 of FIG. 10 executing machine executable instructions such as those implemented by at least blocks 706 and 720 of FIG. 7. In some examples, the image read/write circuitry 204 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the image read/write circuitry 204 may be instantiated by any other combination of hardware, software, and/or firmware. For example, the image read/write circuitry 204 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example encoder element selector circuitry 206 of the illustrated example of FIG. 2 selects the elements in the popup image to which the data will be encoded. The encoder element selector circuitry 206 obtains the dimensions of the popup image and the user's secret image. For example, the popup image has a first size Xₚ by Yₚ, and the user's secret image has a second size Xᵤ by Yᵤ. The encoder element selector circuitry 206 selects and assigns a pixel address within the popup image for each element in the user's secret image such that each element in the secret image corresponds to an element in the popup image. In order to encode the entire secret image into the popup image, the size of the popup image must be equal to or larger than the secret image. In other words, Xₚ x Yₚ ≥ Xᵤ x Yᵤ. In some examples, the encoder element selector circuitry 206 outputs the selected pixel addresses to the image read/write circuitry 204 individually. In other examples, the encoder element selector circuitry 206 outputs the selected pixel addresses to the image read/write circuitry 204 in batches (e.g., every 5 pixel addresses selected, every 10 pixel addresses selected, etc.) or all at once.

In some examples, the encoder element selector circuitry 206 implements a random number generator to select the pixel addresses of the popup image. For example, the encoder element selector circuitry 206 generates a random seed and initializes a random number generator using the random seed. In some examples, the encoder element selector circuitry 206 selects a pixel address in the popup image for the first element at location x, y of the user's secret image to be copied to. The random number generator outputs a pixel address loc_x, loc_y, and the encoder element selector circuitry 206 assigns that pixel address to the first element. The encoder element selector circuitry 206 outputs the element pair (x, y); (loc_x, loc_y) to the image read/write circuitry 204.

In some examples, the encoder element selector circuitry 206 creates a buffer to prevent writing over encoded data. For example, the encoder element selector circuitry 206 selects a first pixel address in the popup image for a first element of the secret image. The encoder element selector circuitry 206 adds the first pixel address to the buffer. The encoder element selector circuitry 206 selects a second pixel address in the popup image for a second element of the secret image. The encoder element selector circuitry 206 compares the second pixel address to all pixel addresses in the buffer, including the first pixel address. If the second pixel address matches (e.g., is the same as, is equal to) the first pixel address, the encoder element selector circuitry 206 selects a new second pixel address. In some examples, the encoder element selector circuitry 206 is instantiated by programmable circuitry executing endorsement obtainer instructions and/or configured to perform operations such as those represented by the flowchart of FIG. 7.

In some examples, the image encoder circuitry 102 includes means for selecting elements of the popup image. For example, the means for selecting may be implemented by the encoder element selector circuitry 206. In some examples, the encoder element selector circuitry 206 may be instantiated by programmable circuitry such as the example programmable circuitry 912 of FIG. 9. For instance, the encoder element selector circuitry 206 may be instantiated by the example microprocessor 1000 of FIG. 10 executing machine executable instructions such as those implemented by at least blocks 708-718 and 722-732 of FIG. 7. In some examples, the encoder element selector circuitry 206 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the encoder element selector circuitry 206 may be instantiated by any other combination of hardware, software, and/or firmware. For example, the encoder element selector circuitry 206 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the image encoder circuitry 102 of FIG. 1 is illustrated in FIG. 2, one or more of the elements, processes, and/or devices illustrated in FIG. 2 may be combined, divided, re-arranged, omitted, eliminated, and/or implemented in any other way. Further, the example popup image handler circuitry 202, the example image read/write circuitry 204, the example encoder element selector circuitry 206, and/or, more generally, the example image encoder circuitry 102 of FIG. 2, may be implemented by hardware alone or by hardware in combination with software and/or firmware. Thus, for example, any of the example popup image handler circuitry 202, the example image read/write circuitry 204, and the example encoder element selector circuitry 206, and/or, more generally, the example image encoder circuitry 102, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example image encoder circuitry 102 of FIG. 2 may include one or more elements, processes, and/or devices in addition to, or instead of, those illustrated in FIG. 2, and/or may include more than one of any or all of the illustrated elements, processes and devices.

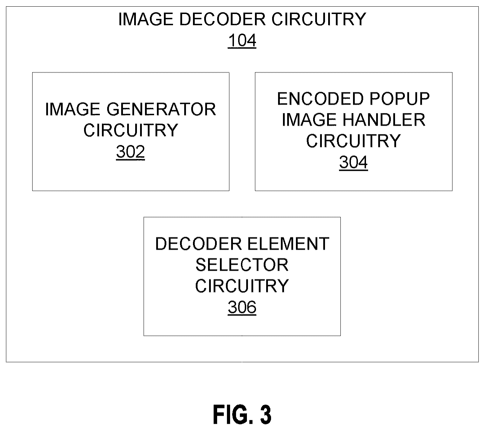

FIG. 3 is a block diagram of an example implementation of the image decoder circuitry 104 of FIG. 1 to decode embedded popup messages. The image decoder circuitry 104 of FIG. 3 may be instantiated (e.g., creating an instance of, bring into being for any length of time, materialize, implement, etc.) by programmable circuitry such as a Central Processor Unit (CPU) executing first instructions. Additionally or alternatively, the image decoder circuitry 104 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

The example image decoder circuitry 104 of the illustrated example of FIG. 3 includes an example image generator circuitry 302, an example encoded popup image handler circuitry 304, and an example decoder element selector circuitry 306.

The example image generator circuitry 302 of the illustrated example of FIG. 3 generates a decoded image (e.g. decoded secret image). The image generator circuitry generates an empty matrix (e.g., an empty decoded image matrix, a decoded image). The image generator circuitry 302 obtains the encoded popup image from the encoded popup image handler circuitry 304. In some examples, the image generator circuitry 302 obtains at least one of an encoded pui(H), pui(S), and/or pui(L) matrices. The image generator circuitry 302 copies (e.g., writes) data from the encoded popup image to the decoded image. In some examples, the image generator circuitry 302 decodes the encoded popup image on an element-by-element basis. In such examples, the data for a given pixel (e.g., element) of the encoded pui(H), pui(S), and/or pui(L) matrices is copied into a single element of the decoded image.

In some examples, the image generator circuitry 302 obtains pixel addresses from the decoder element selector circuitry 306 to select the elements in the encoded pui(H), pui(S), and/or pui(L) matrices and the decoded image. For example, the image generator circuitry 302 obtains a first pixel address for a first element of the encoded pui(S) matrix from which the data is copied and obtains a second pixel address for a second element of the decoded image to which the data is copied.

After the image generator circuitry 302 completes the decoding of the pui(H), pui(S), and/or pui(L) matrices, the image generator circuitry 302 outputs the decoded image to the user display circuitry 118. In some examples, the image generator circuitry 302 is instantiated by programmable circuitry executing popup image handler instructions and/or configured to perform operations such as those represented by the flowchart of FIG. 8.

In some examples, the image decoder circuitry 104 includes means for generating decoded images from an encoded popup image. For example, the means for generating may be implemented by the image generator circuitry 302. In some examples, the image generator circuitry 302 may be instantiated by programmable circuitry such as the example programmable circuitry 912 of FIG. 9. For instance, the image generator circuitry 302 may be instantiated by the example microprocessor 1000 of FIG. 10 executing machine executable instructions such as those implemented by at least blocks 802 and 818 of FIG. 8. In some examples, the image generator circuitry 302 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the image generator circuitry 302 may be instantiated by any other combination of hardware, software, and/or firmware. For example, the image generator circuitry 302 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example encoded popup image handler circuitry 304 of the illustrated example of FIG. 2 obtains the encoded popup image from the popup parser circuitry 122. The encoded popup image handler circuitry 304 separates the encoded popup image into the hue, saturation, and luminance color components. For example, the encoded popup image handler circuitry 304 separates the encoded pui matrix into encoded pui(H), pui(S), and pui(L) matrices. The encoded popup image handler circuitry 304 outputs at least one of the encoded pui(H), pui(S), and/or pui(L) matrices to the image generator circuitry 302. In some examples, the encoded popup image handler circuitry 304 is instantiated by programmable circuitry executing popup image handler instructions and/or configured to perform operations such as those represented by the flowchart of FIG. 8.

In some examples, the image decoder circuitry 104 includes means for handling encoded popup images. For example, the means for handling may be implemented by the encoded popup image handler circuitry 304. In some examples, the encoded popup image handler circuitry 304 may be instantiated by programmable circuitry such as the example programmable circuitry 912 of FIG. 9. For instance, the encoded popup image handler circuitry 304 may be instantiated by the example microprocessor 1000 of FIG. 10 executing machine executable instructions such as those implemented by at least blocks 804 and 832 of FIG. 8. In some examples, the encoded popup image handler circuitry 304 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the encoded popup image handler circuitry 304 may be instantiated by any other combination of hardware, software, and/or firmware. For example, the encoded popup image handler circuitry 304 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example decoder element selector circuitry 306 of the illustrated example of FIG. 3 selects elements in the popup image from which encoded data of the secret image will be extracted to generate the decoded image. The decoder element selector circuitry 306 obtains the dimensions of the encoded popup image and the decoded image. For example, the encoded popup image has a first size Xₚ by Yₚ, and the decoded image has a second size Xᵤ by Yᵤ. The decoder element selector circuitry 306 selects and assigns a pixel address within the encoded popup image for each element in the decoded image such that each element in the decoded image corresponds to an element in the encoded popup image. The decoder element selector circuitry 306 selects and assigns the same pixel addresses as the encoder element selector circuitry 206. That is, elements in the decoded image are assigned the same pixel address of the popup image as their corresponding elements in the secret image. In other words, the decoder element selector circuitry 306 is configured to generate the same selection and assignment of pixel addresses as the encoder element selector circuitry 206.

In some examples, the decoder element selector circuitry 306 outputs the selected pixel addresses to the image generator circuitry 302 individually. In other examples, the decoder element selector circuitry 306 outputs the selected pixel addresses to the image generator circuitry 302 in batches (e.g., every 5 pixel addresses selected, every 10 pixel addresses selected, etc.) or all at once.

In some examples, the decoder element selector circuitry 306 implements a random number generator to select the pixel addresses of the encoded popup image. For example, the decoder element selector circuitry 306 generates a random seed and initializes a random number generator using the random seed. In such examples, the decoder element selector circuitry 306 uses the same random seed and the same random number generator as the encoder element selector circuitry 206 such that the decoder element selector circuitry 306 generates the same random numbers as the encoder element selector circuitry 206.

In some examples, the decoder element selector circuitry 306 creates a buffer to prevent copying the same encoded data twice, and to ensure the selected elements match those selected by the encoder element selector circuitry 206. In some examples, the decoder element selector circuitry 306 is instantiated by programmable circuitry executing endorsement obtainer instructions and/or configured to perform operations such as those represented by the flowchart of FIG. 8.

In some examples, the image decoder circuitry 104 includes means for selecting elements of the encoded popup image. For example, the means for selecting may be implemented by the decoder element selector circuitry 306. In some examples, the decoder element selector circuitry 306 may be instantiated by programmable circuitry such as the example programmable circuitry 912 of FIG. 9. For instance, the decoder element selector circuitry 306 may be instantiated by the example microprocessor 1000 of FIG. 10 executing machine executable instructions such as those implemented by at least blocks 806-816 and 820-830 of FIG. 8. In some examples, the decoder element selector circuitry 306 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the decoder element selector circuitry 306 may be instantiated by any other combination of hardware, software, and/or firmware. For example, the decoder element selector circuitry 306 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the image decoder circuitry 104 of FIG. 1 is illustrated in FIG. 3, one or more of the elements, processes, and/or devices illustrated in FIG. 3 may be combined, divided, re-arranged, omitted, eliminated, and/or implemented in any other way. Further, the example image generator circuitry 302, the example encoded popup image handler circuitry 304, the example decoder element selector circuitry and/or, more generally, the example image decoder circuitry 104 of FIG. 3, may be implemented by hardware alone or by hardware in combination with software and/or firmware. Thus, for example, any of the example image generator circuitry 302, the example encoded popup image handler circuitry 304, the example decoder element selector circuitry and/or, more generally, the example image decoder circuitry 104, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example image decoder circuitry 104 of FIG. 3 may include one or more elements, processes, and/or devices in addition to, or instead of, those illustrated in FIG. 3, and/or may include more than one of any or all of the illustrated elements, processes and devices.

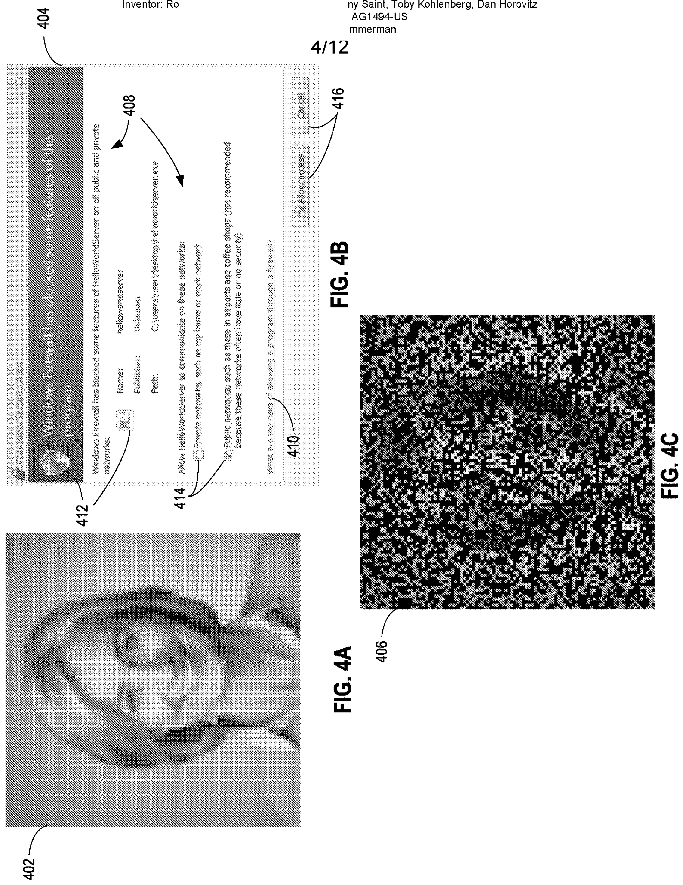

FIGS. 4A-C illustrate encoding and decoding an example image 402 using the saturation channel of an example graphical user interface 404. FIG. 4A is the image 402 to be encoded into the saturation channel of the graphical user interface 404. FIG. 4B is the graphical user interface 404 encoded with the example image 402. FIG. 4C is an example decoded image 406 generated by the image decoder circuitry 104 by decoding the example encoded graphical user interface 404.

The example image 402 is a photo. The image 402 may be provided by the user in any image file format. For example, the image 402 may be a TIFF, GIF, FMP, EPS, JPEG, JPG, Psd, SVG, WebP, Pdf, Raw, PNG, or any other kind of image file. The image 402 is provided by, and known to, a user of the user device. The graphical user interface 404 includes example plain text 408, example hyperlink text 410, example icons 412, example checkboxes 414, and example buttons 416.

The image encoder circuitry 102 encodes the image 402 in the saturation channel of the graphical user interface 404. By encoding the image 402 into the saturation channel, the changes in the appearance of the graphical user interface 404 are virtually undetectable by the human eye. The encoding of the image 402 in the graphical user interface 404 does not interfere with the functionality of the graphical user interface 404. For example, the user is able to read the plain text 408 and hyperlink text 410, check and uncheck the checkboxes 414, and click the buttons 416.

The image decoder circuitry 104 decodes the graphical user interface 404 and generates the decoded image 406. As can be seen in FIG. 4C, the encoding and decoding process using saturations channels causes the generation of artifacts in the decoded image 406. These artifacts occur as a result of the nonlinear saturation channel transformations. Nonetheless, the decoded image 406 retains a sufficient amount of information from the original image 402 to enable a user to recognize the image.

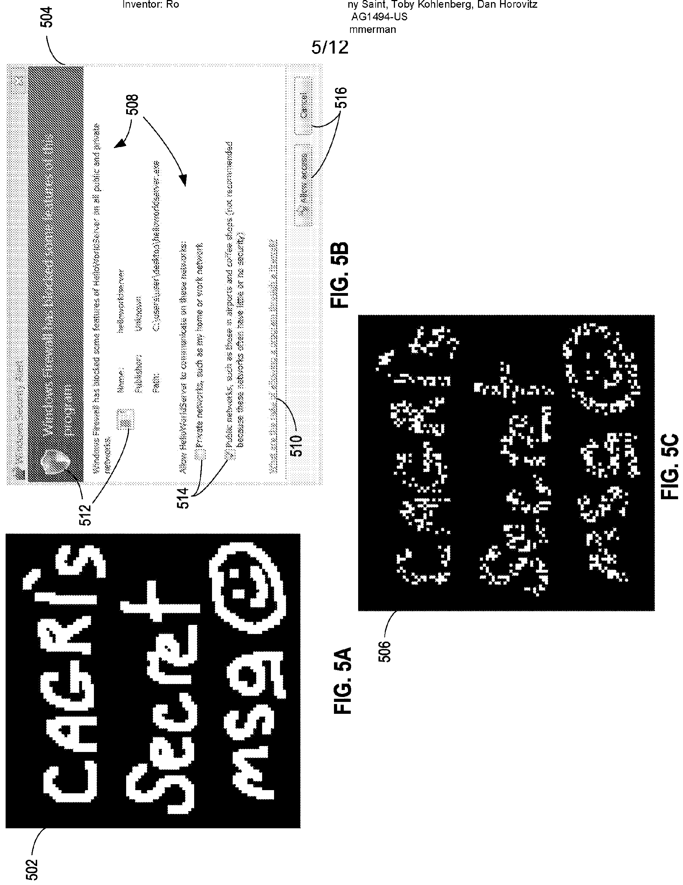

FIGS. 5A-C illustrate encoding and decoding an example image 502 using the saturation channel of an example graphical user interface 504. FIG. 5A is the image 502 to be encoded into the saturation channel of the graphical user interface 504. FIG. 5B is the graphical user interface 504 encoded with the example image 502. FIG. 5C is an example decoded image 506 generated by the image decoder circuitry 104 by decoding the example graphical user interface 504.

The example image 502 is a black and white hand-drawn image. The example image 502 has a lower image complexity (e.g., is a less detailed image) than the image 402 of FIG. 4A. As used herein, the complexity of an image is a measurement of the level of detail in the image, and depends on factors such as the color depth of the image and the resolution of the image. The 502 may be provided by the user in any image file format. For example, the image 502 may be a TIFF, GIF, FMP, EPS, JPEG, JPG, Psd, SVG, WebP, Pdf, Raw, PNG, or any other kind of image file. The image 502 is provided by, and known to, a user of the user device. The graphical user interface 504 includes example plain text 508, example hyperlink text 510, example icons 512, example checkboxes 514, and example buttons 516.

The image encoder circuitry 102 encodes the image 502 in the saturation channel of the graphical user interface 504. As with the image 402, changes in the appearance of the graphical user interface 504 are virtually undetectable by the human eye. The image decoder circuitry 104 decodes the graphical user interface 504 and generates the decoded image 506. As can be seen in FIG. 5C, artifacts generated in the encoding and decoding process do not affect the recognizability of the image 502 to the extent the recognizability of the more detailed image 402 is affected.

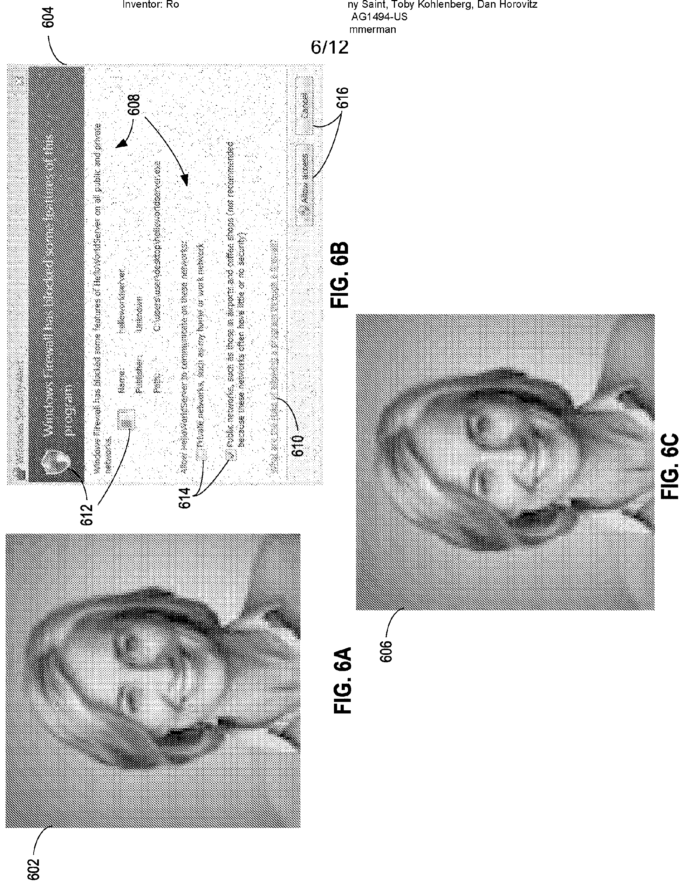

FIGS. 6A-C illustrate encoding and decoding an example image 602 using the luminance channel of an example graphical user interface 604. FIG. 6A is the image 602 to be encoded into the luminance channel of the graphical user interface 604. FIG. 6B is the graphical user interface 604 encoded with the example image 602. FIG. 6C is an example decoded image 606 generated by the image decoder circuitry 104 by decoding the example encoded graphical user interface 604.

The example image 602 is the same as the image 402 of FIG. 4A. The image 602 may be provided by the user in any image file format. For example, the image 602 may be a TIFF, GIF, FMP, EPS, JPEG, JPG, Psd, SVG, WebP, Pdf, Raw, PNG, or any other kind of image file. The image 602 is provided by, and known to, a user of the user device. The graphical user interface 604 includes example plain text 608, example hyperlink text 610, example icons 612, example checkboxes 614, and example buttons 616.

The image encoder circuitry 102 encodes the image 602 in the luminance channel of the graphical user interface 604. Encoding the image 602 into the luminance channel causes a speckling effect in the graphical user interface 604 that is visible to the human eye. This speckling effect does not interfere with the functionality of the graphical user interface 604. For example, the user is still able to read the plain text 608 and hyperlink text 610, check and uncheck the checkboxes 614, and click the buttons 616. However, the speckling effect also gives away positional information of the pixel modifications made during the encoding process. Nonetheless, because the image 602 pixel data is randomly encoded in those different positions of the graphical user interface 604, the image 602 cannot be retrieved by trial and error. That is, the image 602 cannot be decoded from the graphical user interface 604 without the image decoder circuitry 104.

The image decoder circuitry 104 decodes the graphical user interface 604 and generates the decoded image 606. As can be seen in FIG. 6C, encoding and decoding the image 602 using luminance channels achieves a high fidelity in the decoded image 606. Because the luminance channel does not involve non-linear encoding like the saturation and hue channels, the decoded image retains its high fidelity. As such, users can more easily recognize more complex (e.g., more detailed) images when they are displayed alongside the graphical user interface 604.

A flowchart representative of example machine readable instructions, which may be executed by programmable circuitry to implement and/or instantiate the image encoder circuitry 102 of FIG. 2 and/or representative of example operations which may be performed by programmable circuitry to implement and/or instantiate the image encoder circuitry 102 of FIG. 2, is shown in FIG. 7. A flowchart representative of example machine readable instructions, which may be executed by programmable circuitry to implement and/or instantiate the image decoder circuitry 104 of FIG. 3 and/or representative of example operations which may be performed by programmable circuitry to implement and/or instantiate the image decoder circuitry 104 of FIG. 3, is shown in FIG. 8.

The machine readable instructions may be one or more executable programs or portion(s) of one or more executable programs for execution by programmable circuitry such as the programmable circuitry 912 shown in the example processor platform 900 discussed below in connection with FIG. 9 and/or may be one or more function(s) or portion(s) of functions to be performed by the example programmable circuitry (e.g., an FPGA) discussed below in connection with FIGS. 10 and/or 11. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowcharts illustrated in FIGS. 7 and 8, many other methods of implementing the example image encoder circuitry 102 and the example image decoder circuitry 104 may alternatively be used. For example, the order of execution of the blocks of the flowcharts may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable, and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 7 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 7 is a flowchart representative of example machine readable instructions and/or example operations 700 that may be executed, instantiated, and/or performed by programmable circuitry to encode a secret image in a graphical user interface. For example, the operations 700 may be executed to encode the images 402, 502, 602 and in the graphical user interfaces 404, 504, 604. The example machine-readable instructions and/or the example operations 700 of FIG. 7 begin at block 702, at which the popup image handler circuitry 202 generates a popup image. At block 704, popup image handler circuitry 202 splits the popup image into its hue, saturation, and luminance components. At block 706 the image read/write circuitry 204 reads a secret image provided by a user.

At block 708, the encoder element selector circuitry 206 generates a random seed. In some examples, the random seed is specific to the user. In some examples, the random number seed is generated based on information corresponding to the user. For example, the random seed can be a hash value generated based on information associated with the user. At block 710, the encoder element selector circuitry 206 initializes a random number generator using the random seed. At block 712 encoder element selector circuitry 206 initializes a first pixel address of the secret image. For example, the encoder element selector circuitry 206 sets the x and y values for the secret image matrix to zero.

At block 714, the encoder element selector circuitry 206 creates a buffer. At block 716, the encoder element selector circuitry 206 generates random numbers to select a second pixel address of the popup image to encode the data from the first pixel address in. At block 718, the encoder element selector circuitry 206 determines whether the second pixel address is in the buffer. If the second pixel address is in the buffer (e.g., block 718 returns a result of YES), the encoder element selector circuitry 206 returns to block 716 to generate new random numbers. If the second pixel address is not in the buffer (e.g., block 718 returns a result of NO), the image read/write circuitry 204 writes the data in the first pixel address of the secret image to the second pixel address of the popup image (block 720).

At block 722, the encoder element selector circuitry 206 stores the second pixel address in the buffer. At block 724, the encoder element selector circuitry 206 increments the x value for the secret image matrix by one. At block 726, the encoder element selector circuitry 206 determines whether the x value is less than the size of the secret image matrix in the X dimension. If the x value is less than the size of the secret image in the X dimension (e.g., block 726 returns a result of YES), the process returns to block 716. If the x value is not less than the size of the secret image in the X dimension (e.g., block 726 returns a result of NO), the encoder element selector circuitry 206 resets the x value to zero (block 728) and increments the y value by 1 (block 730). At block 732, the encoder element selector circuitry 206 determines whether the y value is less than the size of the secret image matrix in the Y dimension. If the y value is less than the size of the secret image in the Y dimension (e.g., block 732 returns a result of YES), the process returns to block 716. If the y value is not less than the size of the secret image in the Y dimension (e.g., block 732 returns a result of NO), the popup image handler circuitry 202 recombines the hue, saturation, and luminance channels of the popup image (block 734).

FIG. 8 is a flowchart representative of example machine readable instructions and/or example operations 800 that may be executed, instantiated, and/or performed by programmable circuitry to decode a graphical user interface to obtain a decoded image. For example, the operations 800 may be executed to decode the graphical user interfaces 404, 504, 604 to obtain the decoded images 406, 506, 606. The example machine-readable instructions and/or the example operations 800 of FIG. 8 begin at block 802, at which the image generator circuitry 302 generates a decoded secret image matrix. At block 804, encoded popup image handler circuitry 304 splits an encoded popup image into its hue, saturation, and luminance components.

At block 806, the decoder element selector circuitry 306 generates a random seed. The random seed generated by the decoder element selector circuitry 306 is the same as the random seed generated by the encoder element selector circuitry 206 at block 708. At block 808, the decoder element selector circuitry 306 initializes a random number generator using the random seed. At block 810, decoder element selector circuitry 306 initializes a first pixel address of the decoded secret image matrix. For example, the decoder element selector circuitry 306 sets the x and y values for the decoded secret image matrix to zero.

At block 812, the decoder element selector circuitry 306 creates a buffer. At block 814, the decoder element selector circuitry 306 generates random numbers to select a second pixel address of the encoded popup image to decode the data to the first pixel address from. At block 816, the decoder element selector circuitry 306 determines whether the second pixel address is in the buffer. If the second pixel address is in the buffer (e.g., block 816 returns a result of YES), the decoder element selector circuitry 306 returns to block 814 to generate new random numbers. If the second pixel address is not in the buffer (e.g., block 816 returns a result of NO), the image generator circuitry 302 writes the data in the second pixel address of the encoded popup image to the first pixel address of the decoded secret image matrix (block 818).

At block 820, the decoder element selector circuitry 306 stores the second pixel address in the buffer. At block 822, the decoder element selector circuitry 306 increments the x value for the decoded secret image matrix by one. At block 824, the decoder element selector circuitry 306 determines whether the x value is less than the size of the decoded secret image matrix in the X dimension. If the x value is less than the size of the decoded secret image in the X dimension (e.g., block 824 returns a result of YES), the process returns to block 814. If the x value is not less than the size of the decoded secret image in the X dimension (e.g., block 824 returns a result of NO), the decoder element selector circuitry 306 resets the x value to zero (block 826) and increments the y value by 1 (block 828). At block 830, the decoder element selector circuitry 306 determines whether the y value is less than the size of the decoded secret image matrix in the Y dimension. If the y value is less than the size of the decoded secret image in the Y dimension (e.g., block 830 returns a result of YES), the process returns to block 816. If the y value is not less than the size of the decoded secret image in the Y dimension (e.g., block 830 returns a result of NO), the encoded popup image handler circuitry 304 recombines the hue, saturation, and luminance channels of the encoded popup image (block 832).

FIG. 9 is a block diagram of an example programmable circuitry platform 900 structured to execute and/or instantiate the example machine-readable instructions and/or the example operations of FIGS. 7 and 8 to implement the image encoder circuitry 102 of FIG. 2 and/or the image decoder circuitry of FIG. 3. The programmable circuitry platform 900 can be, for example, a server, a personal computer, a workstation, a self-learning machine (e.g., a neural network), a mobile device (e.g., a cell phone, a smart phone, a tablet such as an iPad^{™}), an Internet appliance, or any other type of computing and/or electronic device.

The programmable circuitry platform 900 of the illustrated example includes programmable circuitry 912. The programmable circuitry 912 of the illustrated example is hardware. For example, the programmable circuitry 912 can be implemented by one or more integrated circuits, logic circuits, FPGAs, microprocessors, CPUs, GPUs, DSPs, and/or microcontrollers from any desired family or manufacturer. The programmable circuitry 912 may be implemented by one or more semiconductor based (e.g., silicon based) devices. In this example, the programmable circuitry 912 implements the popup image handler circuitry 202, the image read/write circuitry 204, the encoder element selector circuitry 206, the image generator circuitry 302, the encoded popup image handler circuitry 304, and the decoder element selector circuitry 306. Alternatively, in some examples, the popup image handler circuitry 202, the image read/write circuitry 204, the encoder element selector circuitry 206 are implemented in a first processor circuitry platform 900, and the image generator circuitry 302, the encoded popup image handler circuitry 304, and the decoder element selector circuitry 306 are implemented in a second processor circuitry platform 900.

The programmable circuitry 912 of the illustrated example includes a local memory 913 (e.g., a cache, registers, etc.). The programmable circuitry 912 of the illustrated example is in communication with main memory 914, 916, which includes a volatile memory 914 and a non-volatile memory 916, by a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 916 may be implemented by flash memory and/or any other desired type of memory device. Access to the main memory 914, 916 of the illustrated example is controlled by a memory controller 917. In some examples, the memory controller 917 may be implemented by one or more integrated circuits, logic circuits, microcontrollers from any desired family or manufacturer, or any other type of circuitry to manage the flow of data going to and from the main memory 914, 916.

The programmable circuitry platform 900 of the illustrated example also includes interface circuitry 920. The interface circuitry 920 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 922 are connected to the interface circuitry 920. The input device(s) 922 permit(s) a user (e.g., a human user, a machine user, etc.) to enter data and/or commands into the programmable circuitry 912. The input device(s) 922 can be implemented by, for example, an audio sensor, a microphone, a camera (still or video), a keyboard, a button, a mouse, a touchscreen, a trackpad, a trackball, an isopoint device, and/or a voice recognition system.

One or more output devices 924 are also connected to the interface circuitry 920 of the illustrated example. The output device(s) 924 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 920 of the illustrated example, thus, typically includes a graphics driver card, a graphics driver chip, and/or graphics processor circuitry such as a GPU.

The interface circuitry 920 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 926. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 900 of the illustrated example also includes one or more mass storage discs or devices 928 to store firmware, software, and/or data. Examples of such mass storage discs or devices 928 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 932, which may be implemented by the machine readable instructions of FIGS. 7 and 8, may be stored in the mass storage device 928, in the volatile memory 914, in the non-volatile memory 916, and/or on at least one non-transitory computer readable storage medium such as a CD or DVD which may be removable.

FIG. 10 is a block diagram of an example implementation of the programmable circuitry 912 of FIG. 9. In this example, the programmable circuitry 912 of FIG. 9 is implemented by a microprocessor 1000. For example, the microprocessor 1000 may be a general-purpose microprocessor (e.g., general-purpose microprocessor circuitry). The microprocessor 1000 executes some or all of the machine-readable instructions of the flowcharts of FIGS. 7 and 8 to effectively instantiate the circuitry of FIGS. 2 and 3 as logic circuits to perform operations corresponding to those machine readable instructions. In some such examples, the circuitry of FIGS. 2 and 3 are instantiated by the hardware circuits of the microprocessor 1000 in combination with the machine-readable instructions. For example, the microprocessor 1000 may be implemented by multi-core hardware circuitry such as a CPU, a DSP, a GPU, an XPU, etc. Although it may include any number of example cores 1002 (e.g., 1 core), the microprocessor 1000 of this example is a multi-core semiconductor device including N cores. The cores 1002 of the microprocessor 1000 may operate independently or may cooperate to execute machine readable instructions. For example, machine code corresponding to a firmware program, an embedded software program, or a software program may be executed by one of the cores 1002 or may be executed by multiple ones of the cores 1002 at the same or different times. In some examples, the machine code corresponding to the firmware program, the embedded software program, or the software program is split into threads and executed in parallel by two or more of the cores 1002. The software program may correspond to a portion or all of the machine readable instructions and/or operations represented by the flowcharts of FIGS. 7 and 8.

The cores 1002 may communicate by a first example bus 1004. In some examples, the first bus 1004 may be implemented by a communication bus to effectuate communication associated with one(s) of the cores 1002. For example, the first bus 1004 may be implemented by at least one of an Inter-Integrated Circuit (I2C) bus, a Serial Peripheral Interface (SPI) bus, a PCI bus, or a PCIe bus. Additionally or alternatively, the first bus 1004 may be implemented by any other type of computing or electrical bus. The cores 1002 may obtain data, instructions, and/or signals from one or more external devices by example interface circuitry 1006. The cores 1002 may output data, instructions, and/or signals to the one or more external devices by the interface circuitry 1006. Although the cores 1002 of this example include example local memory 1020 (e.g., Level 1 (L1) cache that may be split into an L1 data cache and an L1 instruction cache), the microprocessor 1000 also includes example shared memory 1010 that may be shared by the cores (e.g., Level 2 (L2 cache)) for high-speed access to data and/or instructions. Data and/or instructions may be transferred (e.g., shared) by writing to and/or reading from the shared memory 1010. The local memory 1020 of each of the cores 1002 and the shared memory 1010 may be part of a hierarchy of storage devices including multiple levels of cache memory and the main memory (e.g., the main memory 914, 916 of FIG. 9). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1002 may be referred to as a CPU, DSP, GPU, etc., or any other type of hardware circuitry. Each core 1002 includes control unit circuitry 1014, arithmetic and logic (AL) circuitry (sometimes referred to as an ALU) 1016, a plurality of registers 1018, the local memory 1020, and a second example bus 1022. Other structures may be present. For example, each core 1002 may include vector unit circuitry, single instruction multiple data (SIMD) unit circuitry, load/store unit (LSU) circuitry, branch/jump unit circuitry, floating-point unit (FPU) circuitry, etc. The control unit circuitry 1014 includes semiconductor-based circuits structured to control (e.g., coordinate) data movement within the corresponding core 1002. The AL circuitry 1016 includes semiconductor-based circuits structured to perform one or more mathematic and/or logic operations on the data within the corresponding core 1002. The AL circuitry 1016 of some examples performs integer based operations. In other examples, the AL circuitry 1016 also performs floating-point operations. In yet other examples, the AL circuitry 1016 may include first AL circuitry that performs integer-based operations and second AL circuitry that performs floating-point operations. In some examples, the AL circuitry 1016 may be referred to as an Arithmetic Logic Unit (ALU).

The registers 1018 are semiconductor-based structures to store data and/or instructions such as results of one or more of the operations performed by the AL circuitry 1016 of the corresponding core 1002. For example, the registers 1018 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1018 may be arranged in a bank as shown in FIG. 10. Alternatively, the registers 1018 may be organized in any other arrangement, format, or structure, such as by being distributed throughout the core 1002 to shorten access time. The second bus 1022 may be implemented by at least one of an I2C bus, a SPI bus, a PCI bus, or a PCIe bus.

Each core 1002 and/or, more generally, the microprocessor 1000 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1000 is a semiconductor device fabricated to include many transistors interconnected to implement the structures described above in one or more integrated circuits (ICs) contained in one or more packages.

The microprocessor 1000 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1000, in the same chip package as the microprocessor 1000 and/or in one or more separate packages from the microprocessor 1000.

FIG. 11 is a block diagram of another example implementation of the programmable circuitry 912 of FIG. 9. In this example, the programmable circuitry 912 is implemented by FPGA circuitry 1100. For example, the FPGA circuitry 1100 may be implemented by an FPGA. The FPGA circuitry 1100 can be used, for example, to perform operations that could otherwise be performed by the example microprocessor 1000 of FIG. 10 executing corresponding machine readable instructions. However, once configured, the FPGA circuitry 1100 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1000 of FIG. 10 described above (which is a general purpose device that may be programmed to execute some or all of the machine readable instructions represented by the flowcharts of FIGS. 7 and 8 but whose interconnections and logic circuitry are fixed once fabricated), the FPGA circuitry 1100 of the example of FIG. 11 includes interconnections and logic circuitry that may be configured, structured, programmed, and/or interconnected in different ways after fabrication to instantiate, for example, some or all of the operations/functions corresponding to the machine readable instructions represented by the flowcharts of FIGS. 7 and 8. In particular, the FPGA circuitry 1100 may be thought of as an array of logic gates, interconnections, and switches. The switches can be programmed to change how the logic gates are interconnected by the interconnections, effectively forming one or more dedicated logic circuits (unless and until the FPGA circuitry 1100 is reprogrammed). The configured logic circuits enable the logic gates to cooperate in different ways to perform different operations on data received by input circuitry. Those operations may correspond to some or all of the instructions (e.g., the software and/or firmware) represented by the flowcharts of FIGS. 7 and 8. As such, the FPGA circuitry 1100 may be configured and/or structured to effectively instantiate some or all of the operations/functions corresponding to the machine readable instructions of the flowcharts of FIGS. 7 and 8 as dedicated logic circuits to perform the operations/functions corresponding to those software instructions in a dedicated manner analogous to an ASIC. Therefore, the FPGA circuitry 1100 may perform the operations/functions corresponding to the some or all of the machine readable instructions of FIGS. 7 and 8 faster than the general-purpose microprocessor can execute the same.

In the example of FIG. 11, the FPGA circuitry 1100 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

The FPGA circuitry 1100 of FIG. 11, includes example input/output (I/O) circuitry 1102 to obtain and/or output data to/from example configuration circuitry 1104 and/or external hardware 1106. For example, the configuration circuitry 1104 may be implemented by interface circuitry that may obtain a binary file, which may be implemented by a bit stream, data, and/or machine-readable instructions, to configure the FPGA circuitry 1100, or portion(s) thereof. In some such examples, the configuration circuitry 1104 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1106 may be implemented by external hardware circuitry. For example, the external hardware 1106 may be implemented by the microprocessor 1000 of FIG. 10.

The FPGA circuitry 1100 also includes an array of example logic gate circuitry 1108, a plurality of example configurable interconnections 1110, and example storage circuitry 1112. The logic gate circuitry 1108 and the configurable interconnections 1110 are configurable to instantiate one or more operations/functions that may correspond to at least some of the machine readable instructions of FIGS. 7 and 8 and/or other desired operations. The logic gate circuitry 1108 shown in FIG. 11 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1108 to enable configuration of the electrical structures and/or the logic gates to form circuits to perform desired operations/functions. The logic gate circuitry 1108 may include other electrical structures such as look-up tables (LUTs), registers (e.g., flip-flops or latches), multiplexers, etc.

The configurable interconnections 1110 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1108 to program desired logic circuits.

The storage circuitry 1112 of the illustrated example is structured to store result(s) of the one or more of the operations performed by corresponding logic gates. The storage circuitry 1112 may be implemented by registers or the like. In the illustrated example, the storage circuitry 1112 is distributed amongst the logic gate circuitry 1108 to facilitate access and increase execution speed.

The example FPGA circuitry 1100 of FIG. 11 also includes example dedicated operations circuitry 1114. In this example, the dedicated operations circuitry 1114 includes special purpose circuitry 1116 that may be invoked to implement commonly used functions to avoid the need to program those functions in the field. Examples of such special purpose circuitry 1116 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1100 may also include example general purpose programmable circuitry 1118 such as an example CPU 1120 and/or an example DSP 1122. Other general purpose programmable circuitry 1118 may additionally or alternatively be present such as a GPU, an XPU, etc., that can be programmed to perform other operations.

Although FIGS. 10 and 11 illustrate two example implementations of the programmable circuitry 912 of FIG. 9, many other approaches are contemplated. For example, FPGA circuitry may include an on-board CPU, such as one or more of the example CPU 1120 of FIG. 11. Therefore, the programmable circuitry 912 of FIG. 9 may additionally be implemented by combining at least the example microprocessor 1000 of FIG. 10 and the example FPGA circuitry 1100 of FIG. 11. In some such hybrid examples, one or more cores 1002 of FIG. 10 may execute a first portion of the machine readable instructions represented by the flowcharts of FIGS. 7 and 8 to perform first operation(s)/function(s), the FPGA circuitry 1100 of FIG. 11 may be configured and/or structured to perform second operation(s)/function(s) corresponding to a second portion of the machine readable instructions represented by the flowcharts of FIGS. 7 and 8, and/or an ASIC may be configured and/or structured to perform third operation(s)/function(s) corresponding to a third portion of the machine readable instructions represented by the flowcharts of FIGS. 7 and 8.

It should be understood that some or all of the circuitry of FIGS. 2 and 3 may, thus, be instantiated at the same or different times. For example, same and/or different portion(s) of the microprocessor 1000 of FIG. 10 may be programmed to execute portion(s) of machine-readable instructions at the same and/or different times. In some examples, same and/or different portion(s) of the FPGA circuitry 1100 of FIG. 11 may be configured and/or structured to perform operations/functions corresponding to portion(s) of machine-readable instructions at the same and/or different times.

In some examples, some or all of the circuitry of FIGS. 2 and 3 may be instantiated, for example, in one or more threads executing concurrently and/or in series. For example, the microprocessor 1000 of FIG. 10 may execute machine readable instructions in one or more threads executing concurrently and/or in series. In some examples, the FPGA circuitry 1100 of FIG. 11 may be configured and/or structured to carry out operations/functions concurrently and/or in series. Moreover, in some examples, some or all of the circuitry of FIGS. 2 and 3 may be implemented within one or more virtual machines and/or containers executing on the microprocessor 1000 of FIG. 10.

In some examples, the programmable circuitry 912 of FIG. 9 may be in one or more packages. For example, the microprocessor 1000 of FIG. 10 and/or the FPGA circuitry 1100 of FIG. 11 may be in one or more packages. In some examples, an XPU may be implemented by the programmable circuitry 912 of FIG. 9, which may be in one or more packages. For example, the XPU may include a CPU (e.g., the microprocessor 1000 of FIG. 10, the CPU 1120 of FIG. 11, etc.) in one package, a DSP (e.g., the DSP 1122 of FIG. 11) in another package, a GPU in yet another package, and an FPGA (e.g., the FPGA circuitry 1100 of FIG. 11) in still yet another package.

A block diagram illustrating an example software distribution platform 1205 to distribute software such as the example machine readable instructions 932 of FIG. 9 to other hardware devices (e.g., hardware devices owned and/or operated by third parties from the owner and/or operator of the software distribution platform) is illustrated in FIG. 12. The example software distribution platform 1205 may be implemented by any computer server, data facility, cloud service, etc., capable of storing and transmitting software to other computing devices. The third parties may be customers of the entity owning and/or operating the software distribution platform 1205. For example, the entity that owns and/or operates the software distribution platform 1205 may be a developer, a seller, and/or a licensor of software such as the example machine readable instructions 932 of FIG. 9. The third parties may be consumers, users, retailers, OEMs, etc., who purchase and/or license the software for use and/or re-sale and/or sub-licensing. In the illustrated example, the software distribution platform 1205 includes one or more servers and one or more storage devices. The storage devices store the machine readable instructions 932, which may correspond to the example machine readable instructions of FIGS. 7 and 8, as described above. The one or more servers of the example software distribution platform 1205 are in communication with an example network 1210, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 932 from the software distribution platform 1205. For example, the software, which may correspond to the example machine readable instructions of FIGS. 7 and 8, may be downloaded to the example programmable circuitry platform 900, which is to execute the machine readable instructions 932 to implement the image encoder circuitry 102 and/or the image decoder circuitry 104. In some examples, one or more servers of the software distribution platform 1205 periodically offer, transmit, and/or force updates to the software (e.g., the example machine readable instructions 932 of FIG. 9) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that provide trust assurance to a user that a presented graphical user interface is legitimate. Example systems, apparatus, articles of manufacture, and methods disclosed herein encode a user image into graphical user interfaces and present the graphical user interface and a decoded user image to the user. By comparing the decoded image to the image provided by the user, disclosed examples enable the user to confirm the authenticity of the popup message. Example systems, apparatus, articles of manufacture, and methods disclosed herein encode image information into at least one of the hue, luminance, and saturation channels of the graphical user interface. Example systems, apparatus, articles of manufacture, and methods disclosed herein utilize a random number generator initialized with a random seed in both the encoder and the decoder. Disclosed systems, apparatus, articles of manufacture, and methods improve the efficiency of using a computing device encoding and decoding graphical user interfaces using information known by both the encoder and the decoder, eliminating the need to communicate the location of the encoded data from the encoder to the decoder. Disclosed systems, apparatus, articles of manufacture, and methods are accordingly directed to one or more improvement(s) in the operation of a machine such as a computer or other electronic and/or mechanical device.

Further examples and combinations thereof include the following:
Example 1 includes at least one non-transitory machine-readable medium including machine-readable instructions to cause at least one processor circuit to at least: generate a graphical user interface; obtain an image associated with a destination for the graphical user interface; embed a first plurality of pixels of the image into at least one of a hue channel, a saturation channel, or a luminance channel of a second plurality of pixels of the graphical user interface to create an embedded graphical user interface; and cause the embedded graphical user interface to be sent to the destination.
Example 2 includes the storage medium of example 1, wherein, to embed the first plurality of pixels, the machine-readable instructions are to cause one or more of the at least one processor circuit to: generate a random seed; initialize a random number generator based on the random seed; and select the second plurality of pixels based on outputs of the random number generator.
Example 3 includes the storage medium of any of examples 1 or 2, wherein the random seed is a hash value generated based on information associated with the destination.
Example 4 includes the storage medium of any of examples 1-3, wherein the second plurality of pixels are in a metadata of the embedded graphical user interface.
Example 5 includes the storage medium of any of examples 1-4, wherein the metadata includes the random seed.
Example 6 includes the storage medium of any of examples 1-5, wherein the destination is a user device, and the machine-readable instructions cause one or more of the at least one processor circuit to obtain the image from a user of the user device.
Example 7 includes the storage medium of any of examples 1-6, wherein the machine-readable instructions are to cause one or more of the at least one processor circuit to: decode the embedded graphical user interface to generate a decoded image; and cause display of the embedded graphical user interface and the decoded image to a user.
Example 8 includes the storage medium of any of examples 1-7, wherein, to decode the graphical user interface, the machine-readable instructions are to cause one or more of the at least one processor circuit to: initialize a random number generator based on a random seed; determine a first plurality of pixel addresses of the embedded graphical user interface correspond to a second plurality of pixel addresses of the decoded image based on outputs of the random number generator; and generate the decoded image based on values in at least one of an embedded hue channel, an embedded saturation channel, or an embedded luminance channel of the embedded graphical user interface at the first plurality of pixel addresses.
Example 9 includes the storage medium of any of examples 1-8, wherein the machine-readable instructions are to cause one or more of the at least one processor circuit to: cause display of the embedded graphical user interface in an interactable display; and cause display of the decoded image in a watermarked display.
Example 10 includes the storage medium of any of examples 1-9, wherein the embedded graphical user interface is a first graphical user interface, the decoded image is a first decoded image, and the machine-readable instructions are to cause one or more of the at least one processor circuit to: decode a second graphical user interface to create a second decoded image; cause display of the second graphical user interface and the second decoded image to the user; determine the second graphical user interface is fraudulent based on a user feedback; and automatically generate an alert indicating malicious activity.
Example 11 includes the storage medium of any of examples 1-10, wherein the user feedback includes at least one of (1) the user closing a window displaying the second graphical user interface or (2) the user indicating the second decoded image does not match the image.
Example 12 includes a system including: an encoder to: embed a first plurality of pixels of an image associated with a user device into at least one of a hue channel, a saturation channel, or a luminance channel of a second plurality of pixels of a graphical user interface to create an embedded graphical user interface; and send the embedded graphical user interface to the user device; a decoder at the user device, the decoder to: decode the embedded graphical user interface to create a decoded image; and cause the user device to display the embedded graphical user interface and the decoded image.
Example 13 includes the system of example 12, wherein the encoder is to select the second plurality of pixels based on a random number generator and a random seed.
Example 14 includes the system of any of examples 12 or 13, wherein the decoder decodes the embedded graphical user interface to create a decoded image based on the random number generator and the random seed.
Example 15 includes the system of any of examples 12-14, wherein the random seed is based on information associated with the user device.
Example 16 includes the system of any of examples 12-15, wherein the second plurality of pixels are in a metadata of the embedded graphical user interface.
Example 17 includes the system of any of examples 12-16, wherein the decoder is to: cause display of the embedded graphical user interface in an interactable display; and cause display of the decoded image in a watermarked display.
Example 18 includes a method including: generating a graphical user interface; obtaining an image associated with a destination for the graphical user interface; embedding, by at least one processor circuit programmed by at least one instruction, a first plurality of pixels of the image into at least one of a hue channel, a saturation channel, or a luminance channel of a second plurality of pixels of the graphical user interface to create an embedded graphical user interface; and causing, by one or more of the at least one processor circuit, the embedded graphical user interface to be sent to the destination.
Example 19 includes the method of example 18, wherein embedding the first plurality of pixels includes: generating a random seed; initializing a random number generator based on the random seed; and selecting the second plurality of pixels based on outputs of the random number generator.
Example 20 includes the storage medium of any of examples 18 or 19, wherein the second plurality of pixels are in a metadata of the embedded graphical user interface.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A method comprising:
generating a graphical user interface;
obtaining an image associated with a destination for the graphical user interface;
embeding a first plurality of pixels of the image into at least one of a hue channel, a saturation channel, or a luminance channel of a second plurality of pixels of the graphical user interface to create an embedded graphical user interface; and
causing the embedded graphical user interface to be sent to the destination.

2. The method of claim 1, wherein, to embed the first plurality of pixels, the method includes:
generating a random seed;
initializing a random number generator based on the random seed; and
selecting the second plurality of pixels based on outputs of the random number generator.

3. The method of claim 2, wherein the random seed is a hash value generated based on information associated with the destination.

4. The method of claim 2, wherein the second plurality of pixels are in a metadata of the embedded graphical user interface.

5. The method of claim 4, wherein the metadata includes the random seed.

6. The method of any preceding claims, wherein the destination is a user device, and the method includes obtaining the image from a user of the user device.

7. The method of any preceding claims, further including:
decoding the embedded graphical user interface to generate a decoded image; and
causing display of the embedded graphical user interface and the decoded image to a user.

8. The method of claim 7, wherein, to decode the graphical user interface, the method includes:
initializing a random number generator based on a random seed;
determining a first plurality of pixel addresses of the embedded graphical user interface correspond to a second plurality of pixel addresses of the decoded image based on outputs of the random number generator; and
generating the decoded image based on values in at least one of an embedded hue channel, an embedded saturation channel, or an embedded luminance channel of the embedded graphical user interface at the first plurality of pixel addresses.

9. The method of claim 7, further including:
causing display of the embedded graphical user interface in an interactable display; and
causing display of the decoded image in a watermarked display.

10. The method of claim 7, wherein the embedded graphical user interface is a first graphical user interface, the decoded image is a first decoded image, and the method incudes:
decoding a second graphical user interface to create a second decoded image;
causing display of the second graphical user interface and the second decoded image to the user;
determining the second graphical user interface is fraudulent based on a user feedback; and
automatically generating an alert indicating malicious activity.

11. The method of claim 10, wherein the user feedback includes at least one of (1) the user closing a window displaying the second graphical user interface or (2) the user indicating the second decoded image does not match the image.

12. A system comprising:
an encoder to:
embed a first plurality of pixels of an image associated with a user device into at least one of a hue channel, a saturation channel, or a luminance channel of a second plurality of pixels of a graphical user interface to create an embedded graphical user interface; and
send the embedded graphical user interface to the user device;
a decoder at the user device, the decoder to:
decode the embedded graphical user interface to create a decoded image; and
cause the user device to display the embedded graphical user
interface and the decoded image.

13. The system of claim 12, wherein the encoder is to select the second plurality of pixels based on a random number generator and a random seed.

14. The system of claim 13, wherein the decoder decodes the embedded graphical user interface to create a decoded image based on the random number generator and the random seed.

15. Machine-readable storage including machine-readable instructions, when executed, to implement a method or realize a system as claimed in any preceding claim.
